# FASCICULE DE BREVET EUROPEEN

(11) **EP 1 207 288 B1**
(45) Date de publication et mention de la délivrance du brevet: **14.06.2006**
(21) Numéro de dépôt: 01402884.9
(22) Date de dépôt: 09.11.2001
(51) Int. Cl.: F02D 13/02

(54) **Procédé de commande d'un moteur à combustion interne en vue de réaliser une combustion homogène**
Verfahren zur Steuerung einer Brennkraftmaschine zur Durchführung einer homogenen Verbrennung
Method of controlling an internal combustion engine in order to produce a homogeneous combustion

(30) Priorité: 17.11.2000 FR 0014831
(43) Date de publication de la demande: 22.05.2002
(73) Titulaire: Renault s.a.s., 92100 Boulogne Billancourt (FR)
(72) Inventeur: Maroteaux, Damien, 78990 Elancourt (FR)

(56) Documents cités:
- EP-A- 0 594 462
- DE-A- 19 905 636
- DE-C- 4 203 365
- DE-C- 19 952 093
- GB-A- 2 301 398
- US-A- 5 367 990
- PATENT ABSTRACTS OF JAPAN vol. 2000, no. 08, 6 octobre 2000 (2000-10-06) & JP 2000 145463 A (TOYOTA MOTOR CORP), 26 mai 2000 (2000-05-26)

## Description

La présente invention concerne un procédé de commande d'un moteur à combustion interne.

La présente invention concerne aussi un moteur pour la mise en oeuvre de ce procédé de commande.

La présente invention concerne plus particulièrement un procédé de commande d'un moteur à combustion interne à injection directe, notamment du type diesel, du type comportant un circuit d'admission d'air et un circuit d'échappement des gaz brûlés qui communiquent avec une chambre de combustion d'au moins un cylindre du moteur respectivement par au moins un conduit d'admission et par au mois un conduit d'échappement, du type dans lequel les communications de chaque conduit d'admission et de chaque conduit d'échappement avec la chambre sont susceptibles d'être obturés chacun respectivement par une soupape, respectivement d'admission et d'échappement, du type comportant un dispositif de distribution variable en vue de modifier les instants d'ouverture des soupapes, notamment en fonction de la charge du moteur, et du type qui fonctionne selon un cycle à quatre temps comprenant une phase d'admission, une phase de compression, une phase de détente et une phase d'échappement,

Généralement, les moteurs du type diesel fonctionnent dans toutes les zones de fonctionnement avec une combustion utilisant un mélange gaz-gazole du type hétérogène, c'est à dire que les gaz d'admission et le gazole sont répartis inégalement dans la chambre de combustion.

Ce mode de fonctionnement, dit mode hétérogène, est la source des émissions de fumées, d'une part, et des émissions d'oxydes d'azote, ou NOx, d'autre part.

Une combustion du type homogène, dans laquelle les gaz d'admission et le gazole sont répartis de manière uniforme dans la chambre de combustion, évite les émissions de fumée et diminue de manière importante les émissions de NOx, tout en conservant un rendement proche de la combustion du type hétérogène.

Pour qu'un moteur puisse fonctionner en mode homogène, il est généralement nécessaire de mettre en oeuvre des moyens d'aide à la vaporisation du gazole et à la formation d'un mélange air-gazole homogène.

Ces moyens sont par exemple le réchauffage de l'air d'admission, l'utilisation de deux injecteurs de carburant, le fonctionnement avec un carburant plus volatile, etc.

Ces moyens nécessitent des artifices coûteux et/ou ne permettent pas le fonctionnement du moteur en mode hétérogène, qui est requis pour obtenir des performances suffisantes, lorsque le moteur fonctionne à pleine charge.

L'invention vise à remédier à ces inconvénients.

Dans ce but, l'invention propose un procédé de commande du type décrit précédemment, caractérisé en ce que, lorsque le moteur fonctionne à faible charge ou à charge partielle, on commande l'ouverture d'au moins une soupape d'échappement pendant une durée déterminée, au début de la phase de compression, en vue de réintroduire, par le conduit d'échappement associé, des gaz d'échappement dans la chambre de combustion, et en ce que l'on anime ces gaz d'échappement d'un mouvement aérodynamique ordonné, notamment du type « swirl » ou « tumble ».

Le mouvement aérodynamique ordonné qui est créé à l'ouverture de la ou des soupapes d'échappement contribue, par la valeur de la vitesse, la turbulence et la température des gaz d'échappement réintroduits dans la chambre de combustion du cylindre, à l'évaporation du carburant et à la formation d'un mélange homogène comprenant des gaz admis par les conduits d'admission, par exemple de l'air et des gaz d'échappement recirculés, des gaz d'échappement réintroduits par les conduits d'échappement et du carburant, par exemple du gazole.

De plus, les gaz d'échappement réintroduits par les conduits d'échappement diluent la charge, ce qui permet de diminuer les émissions de NOx.

L'utilisation d'un système de distribution variable permet un fonctionnement classique du moteur à pleine charge.

Selon d'autres caractéristiques du procédé selon l'invention :
- lorsque le moteur fonctionne à faible charge ou à charge partielle, pendant la phase d'admission, on anime les gaz d'admission, qui sont introduits dans la chambre de combustion par les conduits d'admission, d'un mouvement aérodynamique ordonné du même type que le mouvement aérodynamique des gaz d'échappement réintroduits par les conduits d'échappement ;
- le mouvement aérodynamique ordonné des gaz d'échappement réintroduits est globalement parallèle et orienté dans le même sens que le mouvement aérodynamique ordonné des gaz d'admission, de manière à réaliser un mélange gaz-carburant du type homogène ;
- lorsque le moteur fonctionne à pleine charge, on commande l'ouverture et la fermeture des soupapes selon un diagramme de distribution classique, de manière à réaliser un mélange gaz-carburant du type hétérogène.

L'invention propose aussi un moteur pour la mise en oeuvre du procédé selon l'une des caractéristiques précédentes, caractérisé en ce qu'il comporte des moyens pour animer d'un mouvement aérodynamique ordonné, notamment du type « swirl » ou « tumble », les gaz d'échappement que l'on réintroduit dans la chambre de combustion au début de la phase de compression.

Selon d'autres caractéristiques du moteur selon l'invention :
- le mouvement aérodynamique ordonné dans les gaz d'échappement est animé par la géométrie interne du conduit d'échappement par lequel les gaz d'échappement sont réintroduits dans la chambre de combustion ;
- chaque cylindre comporte un injecteur de carburant du type à plusieurs trous d'injection et une chambre de combustion creusée dans le piston associé ;
- le moteur comporte des soupapes commandées individuellement par des actionneurs linéaires, notamment des actionneurs électromagnétiques.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique partielle en coupe d'une partie d'un moteur à combustion interne dont les soupapes sont commandées individuellement par des actionneurs linéaires selon un procédé conforme aux enseignements de l'invention ;
- la figure 2 est un diagramme qui illustre schématiquement le procédé de commande selon l'invention lorsque le moteur fonctionne à faible charge ou à charge partielle ;
- la figure 3 est une vue similaire à celle de la figure 1 qui illustre le cylindre du moteur commandé selon le procédé représenté à la figure 2 pendant la phase d'admission ; -
- la figure 4 est une vue similaire à celle de la figure 1 qui illustre le cylindre du moteur commandé selon le procédé représenté à la figure 2 au début de la phase de compression.

Dans la description qui va suivre on considère, à titre non limitatif, que le moteur comporte un seul cylindre et que ce cylindre possède une seule soupape d'admission et une seule soupape d'échappement commandées individuellement par des actionneurs linéaires électromagnétiques.

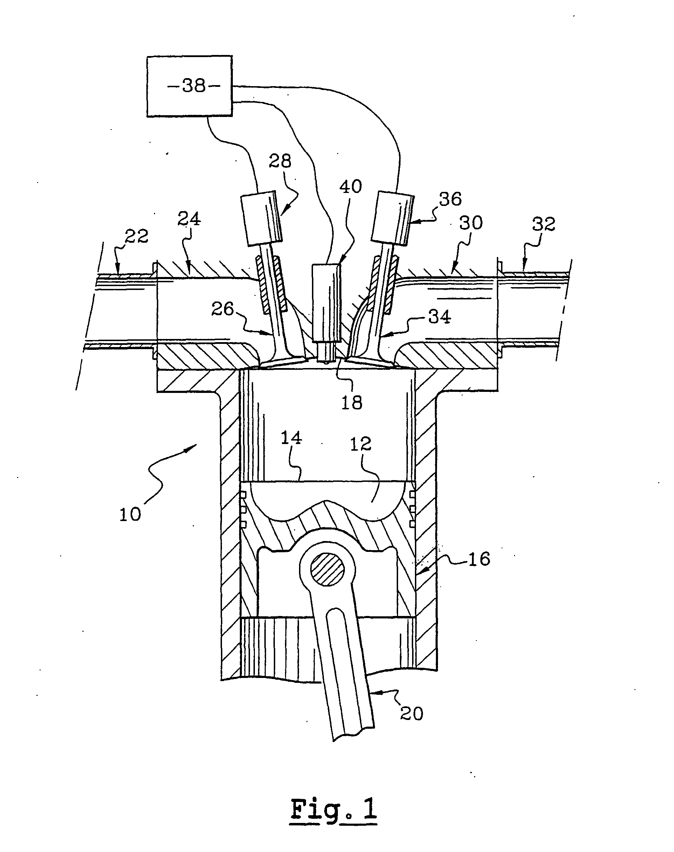

On a représenté à la figure 1 un cylindre 10 d'un moteur du type diesel à injection directe.

La partie supérieure du cylindre 10 forme une chambre de combustion 12 qui est creusée dans la face supérieure 14 d'un piston mobile 16 et qui est délimitée en haut par une culasse 18.

Dans la partie inférieure du cylindre 10, une bielle 20 relie le piston 16 à un vilebrequin (non représenté).

Le cylindre 10 est alimenté en gaz d'admission par un circuit d'admission 22 qui communique avec la chambre de combustion 12 du cylindre 10 par un conduit d'admission 24 qui débouche dans la chambre de combustion 12 au travers d'une soupape d'admission 26 dont les déplacements sont commandés par un actionneur électromagnétique linéaire 28 afin d'obturer ou non la communication entre le conduit d'admission 26 et la chambre de combustion 12.

Un conduit d'échappement 30 est prévu pour l'évacuation des gaz brûlés hors de la chambre de combustion 12, vers un circuit d'échappement 32, au travers d'une soupape d'échappement 34 également commandée par un actionneur linéaire électromagnétique 36.

La commande des soupapes d'admission 26 et d'échappement 34 est assurée par une unité électronique de commande 38 qui pilote les actionneurs 28, 36.

L'unité électronique 38 commande aussi l'injection directe de carburant, ici du gazole, dans la chambre de combustion 12, au moyen d'un injecteur de carburant 40 du type à plusieurs trous d'injection.

L'unité électronique de commande 38 comporte notamment des moyens de mémorisation d'une ou plusieurs cartographies de fonctionnement du moteur.

L'unité électronique de commande 38 reçoit des signaux représentatifs de paramètres de fonctionnement tels que le régime du moteur, la pression atmosphérique, la pression dans chaque cylindre 10, le débit des gaz d'admission et/ou d'échappement, le couple instantané fourni, etc.

Selon le principe du cycle à quatre temps d'un moteur à combustion, celui-ci s'effectue en deux rotations du vilebrequin et en quatre courses du piston 16, entre le point mort haut PMH et le point mort bas PMB de sa course.

Les quatre temps du cycle sont la phase d'admission Pa, la phase de compression Pc, la phase de combustion-détente Pd et la phase d'échappement Pe.

On expliquera maintenant le fonctionnement du moteur selon un procédé de commande conforme aux enseignements de l'invention.

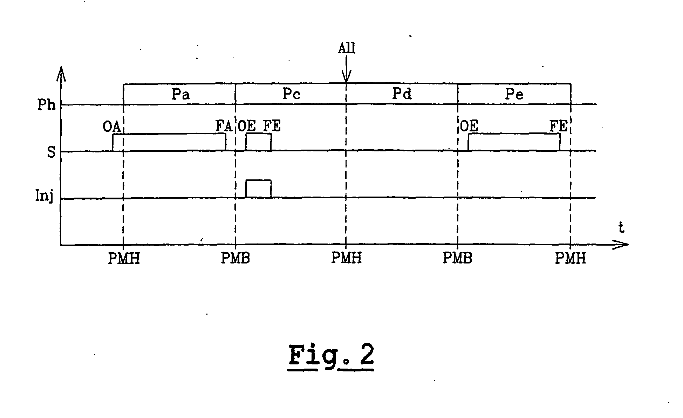

Lorsque le moteur fonctionne à faible charge ou à charge partielle, on commande le moteur de la manière suivante, qui est illustrée par la figure 2.

Sur la figure 2 qui représente le procédé de commande du moteur selon l'invention en fonction du temps t, on a indiqué :
- sur la ligne Ph, les quatre temps du cycle de fonctionnement du moteur et l'instant de l'allumage All du mélange gaz-carburant ;
- sur la ligne S, les instants d'ouverture et de fermeture des soupapes 26, 34 ; et
- sur la ligne Inj, la durée de l'injection de carburant.

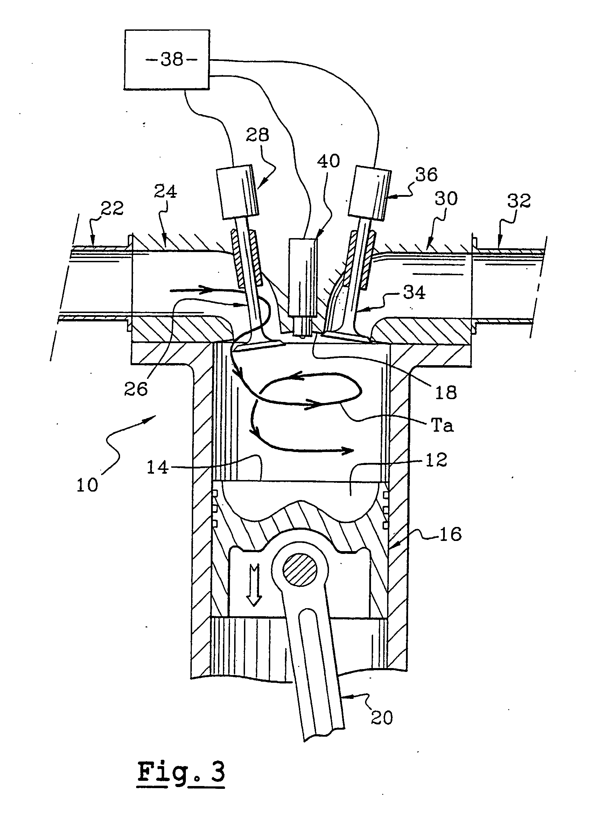

De manière classique, au début de la phase d'admission Pa, on commande l'ouverture OA de la soupape d'admission 26, comme on l'a représenté sur la figure 3, en vue d'admettre dans la chambre de combustion 12, par le conduit d'admission 24, des gaz d'admission provenant du circuit d'admission 22.

Les gaz d'admission sont constitués d'air et, éventuellement, de gaz d'échappement recirculés, dans le cas où le moteur comporte un conduit de recirculation des gaz d'échappement depuis le circuit d'échappement 32 vers le circuit d'admission 22.

La géométrie interne du conduit d'admission 24 est prévue pour animer les gaz d'admission, qui sont introduits dans la chambre de combustion 12, d'un mouvement aérodynamique ordonné du type « swirl ».

On rappelle que la formation, dans le cylindre 10, d'un mouvement tourbillonnaire dit de "swirl", dans lequel les gaz contenus dans le cylindre 10 sont animés d'un mouvement de rotation autour d'un axe sensiblement parallèle à l'axe du cylindre 10, permet de favoriser le mélange gaz d'admission-carburant.

Les gaz d'admission sont donc animés d'un mouvement de swirl à l'intérieur de la chambre de combustion 12.

On commande la fermeture FA de la soupape d'admission 26 à la fin de la phase d'admission Pa.

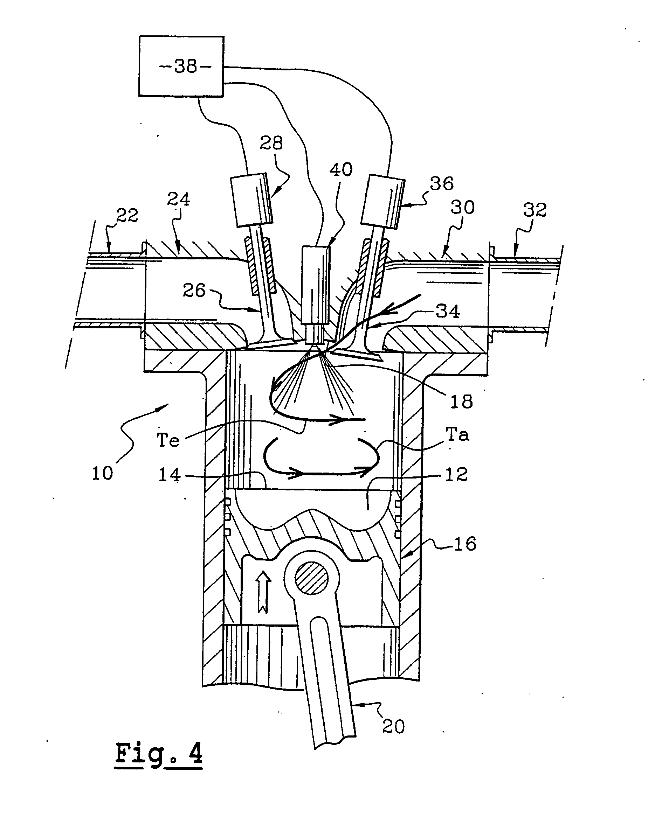

Au début de la phase de compression Pc, alors que la soupape d'admission 26 est fermée, on commande l'ouverture OE de la soupape d'échappement 34 pendant une durée déterminée, comme on l'a représenté sur la figure 4, en vue de réintroduire des gaz d'échappement, par le conduit d'échappement 30, dans la chambre de combustion 12.

En effet, au début de la phase de compression Pc, la pression dans le circuit d'échappement 32 est supérieure à la pression dans la chambre de combustion 12. L'ouverture OE de la soupape d'échappement 34 provoque donc une aspiration des gaz d'échappement contenus dans le circuit d'échappement 32 vers la chambre de combustion 12.

L'instant et la durée d'ouverture de la soupape d'échappement 34 pendant la phase de compression Pc sont déterminés par l'unité électronique 38, en fonction par exemple de la charge du moteur.

De manière similaire au conduit d'admission 24, la géométrie interne du conduit d'échappement 30 est prévue pour animer les gaz d'échappement, qui sont réintroduits dans la chambre de combustion 12, d'un mouvement de swirl, de même orientation et de même sens que le mouvement de swirl des gaz d'admission.

La « trajectoire » Te des gaz d'échappement est donc sensiblement parallèle à la « trajectoire » Ta des gaz d'admission.

Pendant la phase de compression Pc, le mouvement de swirl des gaz d'échappement s'ajoute au mouvement de swirl des gaz d'admission, qui se poursuit après la fermeture FA de la soupape d'admission 26.

Simultanément, pendant l'ouverture OE de la soupape d'échappement 34, l'injecteur de carburant 40 pulvérise du gazole dans la chambre de combustion 12.

Grâce au mouvement de swirl des gaz contenus dans la chambre de combustion 12, et grâce à la présence de gaz d'échappement, le gazole est rapidement vaporisé et il se forme un mélange homogène de gaz d'admission, de gaz d'échappement réintroduits et de gazole.

L'unité électronique 38 commande la fermeture FE de la soupape d'échappement 34 quelques degrés d'angle vilebrequin après son ouverture OE.

Le cycle de fonctionnement du moteur se poursuit ensuite de manière classique.

A la fin de la phase de compression Pc, le mélange s'auto-allume, ce qui déclenche le début de la phase de combustion-détente Pd.

A la fin de la phase de combustion-détente Pd, on commande l'ouverture OE de la soupape d'échappement 34, en vue d'évacuer les gaz brûlés vers le circuit d'échappement 32, au cours de la phase d'échappement Pe.

A la fin de la phase d'échappement Pe, on commande la fermeture FE de la soupape d'échappement 34, puis le moteur commence un nouveau cycle.

Lorsque le moteur fonctionne à pleine charge, on commande l'ouverture et la fermeture des soupapes 26, 34 selon un diagramme de distribution classique, de manière à réaliser un mélange gaz d'admission-gazole du type hétérogène.

Le cycle de fonctionnement selon le diagramme de distribution classique est similaire à celui qui vient d'être décrit, mais la soupape d'échappement 34 n'est pas ouverte pendant la phase de compression Pc.

Selon des variantes de réalisation (non représentées) de l'invention, le moteur peut comporter différents moyens connus pour animer des gaz d'un mouvement aérodynamique ordonné.

Ces moyens sont, par exemple, des déflecteurs agencés dans les conduits d'admission 24 et d'échappement 30, ou bien une commande adaptée de l'ouverture et de la fermeture des soupapes 26, 34, en particulier dans un moteur comportant plusieurs soupapes d'admission 26 et/ou plusieurs soupapes d'échappement 34 par cylindre 10, etc.

Selon une variante de réalisation (non représentée) de l'invention, le mouvement aérodynamique ordonné des gaz d'admission et d'échappement peut être du type « tumble », c'est à dire que les gaz contenus dans le cylindre 10 sont animés d'un mouvement de rotation autour d'un axe sensiblement orthogonal à l'axe du cylindre 10.

Selon une variante de réalisation (non représentée) de l'invention, la réintroduction des gaz d'échappement par l'ouverture de la soupape d'échappement peut se faire sans mouvement aérodynamique ordonné ; dans ce cas, c'est la turbulence générée par les gaz d'échappement qui assure le mélange.

On note que le procédé selon l'invention peut être mis en oeuvre en vue de réaliser un mélange gaz-carburant du type stratifié, c'est à dire sous forme de couches, notamment dans le cadre d'un moteur à essence.

Dans ce cas, on commande les moyens qui animent les gaz introduits dans la chambre de combustion 12 d'un mouvement aérodynamique ordonné de manière que les gaz et le carburant forment des couches sensiblement distinctes.

On a décrit l'invention dans le cadre d'un moteur à soupapes 26, 34 commandées individuellement par des actionneurs linéaires 28, 36.

Bien entendu, l'invention s'applique à d'autres types de moteurs comportant un dispositif de distribution variable.

Les moteurs selon l'invention peuvent comporter plusieurs cylindres 10 et plusieurs soupapes d'admission 26 et/ou d'échappement 34 par cylindre 10.

## Revendications

1. Procédé de commande d'un moteur àcombustion interne a injection directe, notamment du type diesel, du type comportant un circuit d'admission d'air (22) et un circuit d'échapemment (32) des gaz brûlés qui communiquent avec une chambre de combustion (12) d'au moins un cylindre (10) du moteur respectivement par au moins un conduit d'admission (24) et par au mois un conduit d'échappement (30), du type dans lequel les communications de chaque conduit d'admission (24) et de chaque conduit d'échappement (30) avec la chambre (12) sont susceptibles d'être obturés chacun respectivement par une soupape, respectivement d'admission (26) et d'échappement (34), du type comportant un dispositif de distribution variable en vue de modifier les instants d'ouverture des soupapes (26, 34), notamment en fonction de la charge du moteur, et du type qui fonctionne selon un cycle à quatre temps comprenant une phase d'admission (Pa), une phase de compression (Pc), une phase de combustion-détente (Pd) et une phase d'échappement (Pe),
**caractérisé en ce que**, lorsque le moteur fonctionne à faible charge ou à charge partielle, on commande l'ouverture d'au moins une soupape d'échappement (34) pendant une durée déterminée, au début de la phase de compression (Pc), en vue de réintroduire, par le conduit d'échappement (30) associé, des gaz d'échappement dans la chambre de combustion (12), et **en ce que** l'on anime ces gaz d'échappement d'un mouvement aérodynamique ordonné, notamment du type « swirl » ou « tumble ».

2. Procédé selon la revendication précédente, **caractérisé en ce que**, lorsque le moteur fonctionne à faible charge ou à charge partielle, pendant la phase d'admission (Pa), on anime les gaz d'admission, qui sont introduits dans la chambre de combustion (12) par les conduits d'admission (24), d'un mouvement aérodynamique ordonné du même type que le mouvement aérodynamique des gaz d'échappement réintroduits par les conduits d'échappement (30).

3. Procédé selon la revendication précédente, **caractérisé en ce que** le mouvement aérodynamique ordonné des gaz d'échappement réintroduits est globalement parallèle et orienté dans le même sens que le mouvement aérodynamique ordonné des gaz d'admission, de manière à réaliser un mélange gaz-carburant du type homogène.

4. Procédé selon la revendication précédente, **caractérisé en ce que**, lorsque le moteur fonctionne à pleine charge, on commande l'ouverture et la fermeture des soupapes (26, 34) selon un diagramme de distribution classique, de manière à réaliser un mélange gaz-carburant du type hétérogène.

5. Moteur pour la mise en oeuvre du procédé selon l'une quelconque des revendications précédentes, **caractérisé en ce qu'**il comporte des moyens pour animer d'un mouvement aérodynamique ordonné, notamment du type « swirl » ou « tumble », les gaz d'échappement que l'on réintroduit dans la chambre de combustion (12) au début de la phase de compression (Pc).

6. Moteur selon la revendication précédente, **caractérisé en ce que** le mouvement aérodynamique ordonné dans les gaz d'échappement est animé par la géométrie interne du conduit d'échappement (30) par lequel les gaz d'échappement sont réintroduits dans la chambre de combustion (12).

7. Moteur selon l'une quelconque des revendications 5 ou 6, **caractérisé en ce que** chaque cylindre (10) comporte un injecteur de carburant (40) du type à plusieurs trous d'injection et une chambre de combustion (12) creusée dans le piston (16) associé.

8. Moteur selon l'une quelconque des revendications 5 à 7, **caractérisé en ce qu'**il comporte des soupapes (26, 34) commandées individuellement par des actionneurs linéaires (28, 36), notamment des actionneurs électromagnétiques.

## Claims

1. A control method for a direct-injection internal combustion engine, in particular of the diesel type, of the type comprising an air intake circuit (22) and a combusted gas exhaust circuit (32) which communicate with a combustion chamber (12) of at least one cylinder (10) of the engine via at least one intake duct (24) and via at least one exhaust duct (30) respectively, of the type in which the communication of each intake duct (24) and each exhaust duct (30) with the chamber (12) may each be closed by a respective intake valve (26) and exhaust valve (34), of the type comprising a variable distribution device in order to modify the opening instants of the valves (26, 34), in particular as a function of the engine load, and of the type which functions with a four-stroke cycle comprising an intake stroke (Pa), a compression stroke (Pc), a combustion-relaxation stroke (Pd) and an exhaust stroke (Pe), **characterised in that** when the engine is functioning at low load or partial load, at least one exhaust valve (34) is caused to open for a predetermined period, at the beginning of the compression stroke (Pc), in order to re-introduce exhaust gases into the combustion chamber (12) via the associated exhaust duct (30), and **in that** these exhaust gases are provided with an ordered aerodynamic movement, in particular of the swirl or tumble type.

2. A method as claimed in the preceding claim, **characterised in that**, when the engine is functioning at low or partial load, the intake gases introduced into the combustion chamber (12) via the intake ducts (24) are provided, during the intake stroke (Pa), with an ordered aerodynamic movement of the same type as the aerodynamic movement of the exhaust gases re-introduced via the exhaust ducts (30).

3. A method as claimed in the preceding claim, **characterised in that** the ordered aerodynamic movement of the re-introduced exhaust gases is substantially parallel and oriented in the same direction as the ordered aerodynamic movement of the intake gases so as to achieve a gas-fuel mixture of homogeneous type.

4. A method as claimed in the preceding claim, **characterised in that** when the engine is functioning at full load, the valves (26, 34) are caused to open and close in accordance with a conventional distribution diagram so as to achieve a gas-fuel mixture of heterogeneous type.

5. An engine for the implementation of the method as claimed in any one of the preceding claims, **characterised in that** it comprises means for providing the exhaust gases re-introduced into the combustion chamber (12) at the beginning of the compression stroke (Pc) with an ordered aerodynamic movement, in particular of the swirl or tumble type.

6. An engine as claimed in the preceding claim, **characterised in that** the ordered aerodynamic movement of the exhaust gases is provided by the internal geometry of the exhaust duct (30) via which the exhaust gases are re-introduced into the combustion chamber (12).

7. An engine as claimed in any one of claims 5 or 6, **characterised in that** each cylinder (10) comprises a fuel injector (40) of the type with a plurality of injection holes and a combustion chamber (12) provided in the associated piston (16).

8. An engine as claimed in any one of claims 5 to 7, **characterised in that** it comprises valves (26, 34) controlled individually by linear actuators (28, 36), in particular electromagnetic actuators.

## Patentansprüche

1. Verfahren zur Steuerung eines Verbrennungsmotors mit Direkteinspritzung, insbesondere vom Dieseltyp, vom Typ mit einem Lufteinlasskrümmer (22) und einem Krümmer (32) zum Auslass der verbrannten Gase, die jeweils über wenigstens eine Einlassleitung (24) und wenigstens eine Auslassleitung (30) mit einer Verbrennungskammer (12) wenigstens eines Zylinders (10) des Motors in Verbindung stehen, vom Typ, in welchem die Verbindung einer jeden Einlassleitung (24) und einer jeden Auslassleitung (30) mit der Kammer (12) jede jeweils durch ein Ventil, jeweils zum Einlass (26) und zum Auslass (34), verschließbar ist, vom Typ mit einer Vorrichtung zur variablen Verteilung, um die Öffnungszeitpunkte der Ventile (26, 34), insbesondere in Abhängigkeit der Motorlast, zu ändern, und vom Typ, welcher gemäß einem Viertaktzyklus betrieben wird, mit einer Einlassphase (Pa), einer Verdichtungsphase (Pc), einer Verbrennungs-Entspannungsphase (Pd) und einer Auslassphase (Pe),
**dadurch gekennzeichnet, dass**, wenn der Motor mit geringer Last oder Teillast betrieben wird, man die Öffnung wenigstens eines Auslassventils (34) zu Beginn der Verdichtungsphase (Pc) während einer bestimmten Dauer befiehlt, um so über die zugeordnete Auslassleitung (30) Abgase in die Verbrennungskammer (12) wieder einzuführen, und **dadurch**, dass den Abgasen eine geordnete aerodynamische Bewegung, insbesondere vom "Swirl"- oder "Tumble"-Typ, mitgegeben wird.

2. Verfahren nach dem vorhergehenden Anspruch, **dadurch gekennzeichnet, dass**, wenn der Motor mit geringer Last oder Teillast betrieben wird, man den Einlassgasen, welche in die Verbrennungskammer (12) durch die Einlassleitungen (24) eingeführt werden, während der Einlassphase (Pa) eine geordnete aerodynamische Bewegung vom selben Typ mitgibt, wie die aerodynamische Bewegung der durch die Auslassleitungen (30) wieder eingeführten Abgase.

3. Verfahren nach dem vorhergehenden Anspruch, **dadurch gekennzeichnet, dass** die geordnete aerodynamische Bewegung der wieder eingeführten Abgase im Wesentlichen parallel zu und in dieselbe Richtung orientiert ist wie die geordnete aerodynamische Bewegung der Einlassgase, um so ein Gas-Kraftstoffgemisch vom homogenen Typ zu verwirklichen.

4. Verfahren nach dem vorhergehenden Anspruch, **dadurch gekennzeichnet, dass**, wenn der Motor mit Volllast betrieben wird, man die Öffnung und das Verschließen der Ventile (26, 34) gemäß einem klassischen Verteilungsdiagramm befiehlt, um so ein Gas-Kraftstoffgemisch vom heterogenen Typ zu verwirklichen.

5. Motor zur Durchführung des Verfahrens nach einem der vorhergehenden Ansprüche, **dadurch gekennzeichnet, dass** er Mittel umfasst, um den Abgasen, die man zu Beginn der Verdichtungsphase (Pc) in die Verbrennungskammer (12) wieder einführt, eine geordnete aerodynamische Bewegung, insbesondere vom "Swirl"- oder "Tumble"-Typ, mitzugeben.

6. Motor nach dem vorhergehenden Anspruch, **dadurch gekennzeichnet, dass** die geordnete aerodynamische Bewegung der Abgase durch die interne Geometrie der Auslassleitung (30) mitgegeben wird, durch welche die Abgase in die Verbrennungskammer (12) wieder eingeführt werden.

7. Motor nach einem der Ansprüche 5 oder 6, **dadurch gekennzeichnet, dass** jeder Zylinder (10) einen Kraftstoffeinspritzer (40) vom Typ mit mehreren Einspritzlöchern und eine in den zugeordneten Kolben (16) eingebrachte Verbrennungskammer (12) umfasst.

8. Motor nach einem der Ansprüche 5 bis 7, **dadurch gekennzeichnet, dass** er Ventile (26, 34) umfasst, die individuell von linearen Stellgliedern (28, 36), insbesondere elektromagnetischen Stellgliedern, gesteuert werden.
